# FASCICULE DE BREVET EUROPEEN

(11) **EP 2 156 942 B1**
(45) Date de publication et mention de la délivrance du brevet: **23.03.2011**
(21) Numéro de dépôt: 09167817.7
(22) Date de dépôt: 13.08.2009
(51) Int. Cl.: B29C 67/00

(54) **Procédé de réalisation d'une pièce par fusion ou frittage sélectif par laser de poudres de matériaux différents**
Verfahren zur Herstellung eines Werkstücks durch Schmelzen oder selektives Sintern mit Hilfe eines Lasers von Pulvern aus unterschiedlichen Materialien
Method for manufacturing a part by selective laser fusion or sintering of powders of different materials

(30) Priorité: 15.08.2008 RU 2008133769
(43) Date de publication de la demande: 24.02.2010
(73) Titulaire: Ecole Nationale d'Ingénieurs de Saint Etienne, 42000 Saint Etienne (FR); Institut de Physique B.I. Stepanov de l'Academie Nationale des Sciences de Biélorussie, 220072 Minsk (BY)
(72) Inventeur: Chivel, Yuri Alexandrovich, 220037, Minsk (BY); Smurov, Igor, 42210, Boisset les Montrond (FR); Laget, Bernard, 42800, Chateauneuf (FR); Yadroitsev, Igor, 42000, Saint-Etienne (FR)
(74) Mandataire: Delorme, Nicolas

(56) Documents cités:
- WO-A1-2004/089851
- WO-A2-2009/010462
- US-B1- 6 861 613

## Description

La présente invention concerne un procédé de réalisation d'une pièce par fusion ou frittage sélectif par laser de poudres de matériaux différents, ainsi qu'une machine pour la mise en oeuvre de ce procédé.

L'invention peut notamment s'appliquer au prototypage rapide et à l'outillage rapide à partir de poudres et à la fabrication de pièces directement utilisables, c'est-à-dire de pièces qui ne sont pas des prototypes.

Il est connu de réaliser une pièce par fusion ou frittage sélectif de poudre par laser. La pièce est réalisée par couches successives sur un plateau de fabrication. On dépose une couche de poudre sur le plateau, que l'on vient traiter par le laser de manière locale, afin de former une partie solide dans les zones souhaitées. Puis une nouvelle couche de poudre est déposée et frittée pour former une nouvelle couche de la pièce et ainsi de suite.

Il est possible de déposer et fritter des couches successives de poudres de matériaux différents, de façon à obtenir une pièce possédant des couches superposées réalisées en des matériaux différents. Toutefois, les procédés connus ne permettent pas de réaliser une couche de la pièce qui comporte plusieurs matériaux différents. En d'autres termes, les procédés connus ne permettent pas d'obtenir des zones fritées de poudres différentes situées dans une même couche.

Des procédés de réalisation d'une pièce par fusion / frittage de poudre par laser sont décrits dans les documents WO 2009/010462 et US 6 861 613.

La présente invention vise à remédier aux inconvénients mentionnés ci-dessus, en fournissant un procédé permettant de réaliser une pièce en 3D par fusion ou frittage sélectif de poudre par laser, au moins une couche de cette pièce issue de la fusion ou du frittage d'une même couche de poudre comportant au moins deux matériaux différents.

L'invention concerne donc un procédé de réalisation d'une pièce par fusion ou frittage sélectif de poudre par laser, en plusieurs couches i successives, la couche i ayant une épaisseur eᵢ, i variant de 1 à N, au moins une couche i de la pièce comportant au moins un premier et un deuxième matériaux différents.

Selon une définition générale de l'invention, la réalisation de la couche i de la pièce est définie par la revendication 1.

Ainsi, grâce à l'invention, on peut obtenir dans une même couche de la pièce plusieurs parties réalisées par le frittage ou la fusion de poudres de matériaux différents.

En pratique, la frontière entre les première et deuxième parties de la couche considérée de la pièce peut être sensiblement plane, ou courbe ou former une surface brisée. On peut également envisager de former, dans une même couche de poudre, des parties disjointes qui sont reliées l'une à l'autre par les autres couches de la pièce.

L'homme du métier comprendra que l'invention permet la réalisation de plus de deux parties en matériaux différents dans une même couche de la pièce. Pour cela, après l'étape e), on enlève la poudre du deuxième matériau qui n'a pas été frittée, au moins sur une épaisseur eᵢ, puis on dépose sur le plateau une couche de poudre d'un troisième matériau, jusqu'à un niveau Eᵢ, puis on procède à la fusion ou au frittage sélectif de cette couche et ainsi de suite.

Par « jusqu'à un niveau Eᵢ au-dessus de la face supérieure du plateau » on entend que : si on a enlevé la totalité de la couche précédente de poudre, alors la nouvelle poudre est déposée sur une épaisseur Eᵢ ; si on n'a enlevé qu'une épaisseur eᵢ de la couche précédente de poudre, alors la nouvelle poudre est déposée sur une épaisseur eᵢ.

Selon un premier mode de réalisation, le dépôt et la fusion / le frittage d'une couche de la première poudre est immédiatement suivi du dépôt et de la fusion / du frittage d'une couche de la deuxième poudre.

Selon un deuxième mode de réalisation, la couche i de la pièce est réalisée d'abord en sous-couches successives du premier matériau, puis la poudre non frittée de ce premier matériau est éliminée, puis on réalise les sous-couches successives du deuxième matériau. Ainsi :
- on réalise la première partie sensiblement solide de la couche i de la pièce par étapes successives qui, en partant d'une épaisseur (Eᵢ₋₁ = e₁ + ... + eᵢ₋₁) de poudre sur le plateau, consistent à :
   a1) déposer sur le plateau une couche de poudre du premier matériau sur une épaisseur d₁ < eᵢ ;
   b1) réaliser la fusion ou le frittage sélectif de la première poudre par laser, sur une épaisseur d₁ ;
   répéter les étapes a1) et b1) pour des épaisseurs successives dⱼ, j variant de 1 à p, avec d₁ + ... + dⱼ + ... + dₚ = eᵢ ;
- puis on réalise la deuxième partie sensiblement solide de la couche i de la pièce par étapes successives qui, en partant d'une épaisseur (Eᵢ₋₁, = e₁ + ... + eᵢ₋₁) de poudre sur le plateau, consistent à :
   d1) déposer sur le plateau une couche de poudre du deuxième matériau sur une épaisseur D₁ < eᵢ ;
   e1) réaliser la fusion ou le frittage sélectif de la deuxième poudre par laser, sur une épaisseur D₁ ;
   répéter les étapes d1) et e1) pour des épaisseurs successives Dₖ, k variant de 1 à q, avec D₁ + ... + Dₖ + ... + D_{q} = eᵢ.

Ce mode de réalisation est avantageux car il permet de diminuer le nombre d'opération d'élimination d'une poudre avant le dépôt et la fusion / le frittage d'une autre poudre.

On comprendra que, pour la réalisation de la première couche (i=1), on part d'une épaisseur de poudre nulle sur le plateau, c'est-à-dire de la face supérieure du plateau.

En outre, la réalisation de la couche (i+1) de la pièce comprend les étapes successives suivantes :
f) après l'étape e), déplacer le plateau sensiblement verticalement vers le bas jusqu'à une position située à une distance eᵢ₊₁ sous la position occupée par le plateau à l'étape a)
g) répéter les étapes a) à e).

De façon concrète, la première couche de la pièce est réalisée sur la face supérieure du plateau de fabrication, et au début de la réalisation de la couche i de la pièce, la face supérieure du plateau est située à une distance Eᵢ en-dessous d'un plan de travail d'une machine pour la mise en oeuvre du procédé.

Initialement, lorsqu'on débute la réalisation de la pièce, la face supérieure du plateau se situe à une position 0 qui correspond à un plan de travail de la machine pour la mise en oeuvre du procédé. Puis, pour la réalisation de la couche i, on place la face supérieure du plateau à une position -Eᵢ = - (e₁ + ... + eᵢ) et on dépose la poudre considérée jusqu'à affleurement du plan de travail.

Ainsi, Eᵢ correspond à l'épaisseur de la pièce dont les couches 1 à i ont été réalisées.

Selon une réalisation possible, entre les étapes e) et f), le procédé comprend en outre l'étape consistant à éliminer la poudre du deuxième matériau qui n'a pas été frittée, au moins sur une épaisseur eᵢ.

Avantageusement, après la fusion ou le frittage sélectif d'une poudre, et avant le dépôt d'une poudre d'un autre matériau, on élimine la totalité de ladite poudre qui n'a pas été frittée. Ce mode de réalisation est particulièrement avantageux car il évite le mélange de poudres différentes. Ceci permet la récupération sélective des poudres qui pourront être réutilisées, et donc la diminution du coût de fabrication de la pièce.

En pratique, ce mode de réalisation consiste à enlever la couche de poudre jusqu'à la face supérieure du plateau et non seulement sur une épaisseur eᵢ. Le dépôt de la prochaine couche de poudre s'effectue alors sur une épaisseur de Eᵢ pour la couche i. A l'inverse, si on éliminait seulement la poudre sur une épaisseur eᵢ, le dépôt de la prochaine couche de poudre s'effectuerait sur une épaisseur eᵢ.

Dans le cas où une couche est réalisée en plusieurs sous couches, on peut n'éliminer qu'une fois la poudre en question, et non pas entre chaque sous couche.

Selon une réalisation possible, suite à la fusion ou au frittage sélectif d'une poudre de la couche i, le plateau est déplacé sensiblement verticalement vers le haut d'une distance égale à Eᵢ.

En d'autres termes la face supérieure du plateau est ramenée à la position 0 pour l'opération visant à éliminer la poudre. En variante, et selon le procédé d'élimination de poudre mis en oeuvre, on pourrait envisager de ne pas le remonter jusqu'à la position 0, pour autant que la poudre puisse être éliminée de façon satisfaisante.

Par « distance appropriée », on entend que : si l'opération successive concerne l'autre poudre de la même couche i, alors le plateau est abaissé de Eᵢ ; si l'opération successive concerne la couche i+1, alors le plateau est abaissé de Eᵢ₊₁.

La poudre peut être éliminée par un procédé mécanique mettant en oeuvre des moyens tels que une brosse, un rouleau, un couteau ou équivalent. Dans ce cas, on prévoit généralement de ramener le plateau à la position 0 pour cette opération.

En variante, la poudre peut être éliminée par l'action d'un gaz soufflé et/ou par aspiration, ou par un procédé électrostatique selon la nature de la poudre. Ces deux méthodes peuvent ne pas nécessiter le retour du plateau à la position 0.

La poudre peut être déposée par un ou plusieurs rouleaux et/ou par un dispositif comportant une racle et/ou par projection gazodynamique.

Avantageusement, le procédé peut comprendre en outre une étape de récupération séparée des première et deuxième poudres.

Selon un deuxième aspect, l'invention concerne une machine pour la réalisation d'une pièce par fusion ou frittage sélectif de poudre par laser, en plusieurs couches i successives, la couche i ayant une épaisseur eᵢ, i variant de 1 à N, au moins une couche i de la pièce comportant au moins un premier et un deuxième matériaux différents, la machine comprenant :
- un laser et un dispositif de balayage et de focalisation apte à diriger le faisceau du laser en différents points successifs de la pièce en cours de réalisation ;
- un plateau de fabrication de la pièce possédant une face supérieure sensiblement horizontale ;
- un premier et un deuxième récipients aptes à contenir respectivement une poudre d'un premier matériau et une poudre d'un deuxième matériau différent du premier ;
- des moyens pour déposer une couche de poudre sur le plateau ;
- des moyens pour éliminer la poudre qui n'a pas été frittée ;
- et, en outre, des moyens de déplacement du plateau, sensiblement verticalement, aptes à provoquer le déplacement du plateau vers le haut et vers le bas d'une distance eᵢ au cours de la réalisation de la couche i de la pièce.

Les moyens de déplacement du plateau comprennent par exemple au moins un organe de déplacement du plateau tel qu'un vérin, actionné par un moteur pas à pas couplé à un dispositif à commande numérique. Avec une telle configuration, des déplacements verticaux du plateau de l'ordre de 1 µm au minimum sont réalisables.

La machine peut en outre comprendre au moins un organe de chauffage apte à chauffer optiquement la couche de poudre afin de permettre sa fusion / son frittage. Il peut s'agir de lampes à décharge de gaz avec réflecteurs, d'une puissance totale de quelques kW, par exemple égale ou supérieure à 3 kW, installées par exemple le long du périmètre de la vitre du capotage de la machine.

Ces lampes permettent le chauffage de la surface de couche de poudre, en particulier lorsque la puissance du laser est insuffisante, par exemple pour des poudres de céramique. Elles permettent également d'éviter les problèmes dus aux gradients thermiques, comme les fissures.

Ce type de chauffage est local, c'est-à-dire que seule la zone où le faisceau laser fritte la poudre est chauffée. De façon concrète, différentes lampes sont synchronisées par ordinateur au dispositif de balayage et de focalisation du faisceau laser. Avec ce système selon l'invention, et à la différence des fours thermiques traditionnels, il n'est pas nécessaire de chauffer jusqu'à des températures élevées la totalité du volume de l'enceinte de fabrication ni la totalité de la pièce fabriquée, ceci conduisant à de nombreux problèmes techniques. En utilisant l'énergie optique qui est absorbée à la surface de la poudre, la zone affectée thermiquement correspondante devient relativement petite et ne pénètre pas en profondeur de la poudre ou de la pièce en cours de fabrication, et ne s'étend pas à tout le volume de l'enceinte.

On décrit à présent, à titre d'exemples non limitatifs, plusieurs modes de réalisation possibles de l'invention, en référence aux figures annexées :
La figure 1 est une vue de côté montrant l'intérieur d'une machine selon l'invention ;
La figure 2 est une vue de dessus montrant l'intérieur de la machine de la figure 1 ;
Les figures 3a à 14b illustrent différentes étapes successives du procédé selon l'invention ;
La figure 15 est une représentation schématique d'une pièce obtenue par le procédé selon l'invention ;
Les figures 16 à 18 sont des représentations schématiques de trois modes d'élimination de la poudre non frittée.

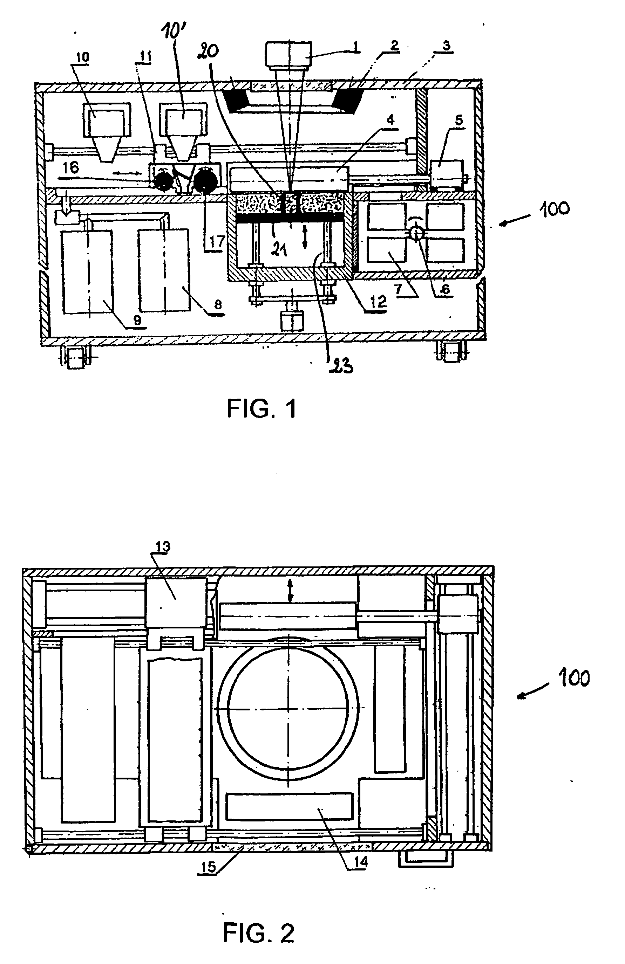

La figure 1 représente une machine 100 pour la réalisation d'une pièce par fusion ou frittage sélectif de poudre par laser, en plusieurs couches successives, au moins une couche de la pièce comportant au moins un premier et un deuxième matériaux différents.

La machine 100 comprend un capotage 3 muni d'une porte d'accès 15 éventuellement vitrée. La machine 100 comporte un laser et un dispositif de balayage et de focalisation 1 du faisceau, lié optiquement au laser, apte à diriger le faisceau du laser en différents points successifs de la pièce 20 en cours de réalisation.

Des lampes 2 à décharge de gaz avec réflecteurs sont agencées pour permettre le chauffage d'une couche de poudre à partir de laquelle sera réalisée une couche de la pièce 20.

Une enceinte de travail 12 comporte un plateau de fabrication 21 sur lequel la pièce 20 sera réalisée, ce plateau 21 se présentant par exemple sous la forme d'un cylindre en acier d'un diamètre de l'ordre de 10 cm et d'une hauteur de l'ordre de 10 cm. Le plateau 21 possède une face supérieure 22 sensiblement horizontale. Sont prévus des moyens de déplacement du plateau 21, selon une direction sensiblement verticale, vers le haut et vers le bas. Ces moyens de déplacement comprennent des vérins 23 actionnés par un moteur pas à pas couplé à un dispositif à commande numérique (non représentés).

Un premier et un deuxième récipients 10, 10' contiennent des poudres de matériaux différents. Un outil 11 comportant une molette 17 permet de déposer une couche de poudre sur le plateau 21. Cet outil 11 de dépôt et de mise en couche de poudre peut comprendre une trémie ainsi qu'un premier rouleau permettant de pousser de la poudre vers le plateau 21 et un deuxième rouleau permettant de tasser la couche de poudre ainsi déposée. Toutefois, d'autres modes de réalisation peuvent être envisagés, par exemple par projection gazodynamique.

Un outil de nettoyage 4 monté sur un chariot de translation 5 permet d'éliminer la poudre située sur le plateau 21 qui n'a pas été frittée. Il se déplace perpendiculairement au mouvement de l'outil 11.

Un outil de nettoyage 16 monté sur l'outil 11 peut se déplacer verticalement et sert à effectuer un nettoyage supplémentaire lors de l'enlèvement de la couche de poudre.

La machine 100 comprend également un système d'injection de gaz 8 et une pompe à vide 9, une enceinte de collecte de poudres avec des conteneurs 7 et un collecteur de poudres 14. Un système rotatif 6 permet le changement des conteneurs 7.

De façon succincte, le plateau 21 est initialement placé à une position 0 correspondant au plan passant par le point inférieur de la molette 17. Pour la réalisation de la première couche de la pièce 20, d'épaisseur e₁, le plateau 21 est abaissé de e₁. A titre d'exemple, l'épaisseur d'une couche peut être de l'ordre de 20 à 100 µm, et le diamètre des particules de la poudre peut varier dans une plage de 5 à 20 µm.

L'outil 11 est rempli d'une couche d'une première poudre en provenance du premier récipient 10. Dans un premier sens de déplacement, l'outil 11 dépose une couche de poudre sur le plateau 21 puis, dans le sens de déplacement opposé, au retour, la molette 17 de l'outil 11 tasse la couche déposée.

On réalise alors la fusion / le frittage sélectif de la couche de cette première poudre, au moyen du laser, ce qui conduit à la création d'une première partie solide de la première couche de la pièce 20.

Puis le plateau 21 est remonté jusqu'à la position 0 et la couche de la première poudre est enlevée à l'aide de l'outil de nettoyage 4 qui se déplace perpendiculairement au mouvement de l'outil 11. L'outil de nettoyage 16 monté sur l'outil 11 pouvant se déplacer verticalement permet un nettoyage supplémentaire lors de l'enlèvement de la couche de poudre.

Le plateau 21 est à nouveau abaissé de e₁, puis l'outil 11 dépose une couche, d'épaisseur e₁, de la deuxième poudre en provenance du deuxième récipient 10'. Après fusion / frittage sélectif de cette deuxième poudre, le plateau est à nouveau relevé jusqu'à la position 0 et le deuxième poudre est éliminée.

Le plateau 21 est alors abaissé jusqu'à la position - (e₁+e₂) pour la réalisation de la deuxième couche, d'épaisseur e₂, et ainsi de suite.

Dans le cas de la nécessité de chauffer la poudre, par exemple, lors du frittage d'une poudre céramique, les lampes de chauffage 2 sont allumées et, par un contrôle en temps réel de leur intensité, les paramètres optimaux de frittage sont obtenus. Si le procédé s'effectue sous atmosphère de gaz inerte ou actif, le capotage est préalablement nettoyé par pompage à vide à l'aide de la pompe 9, après quoi son volume est rempli de gaz avec le système d'injection de gaz 8 contrôlé en temps réel.

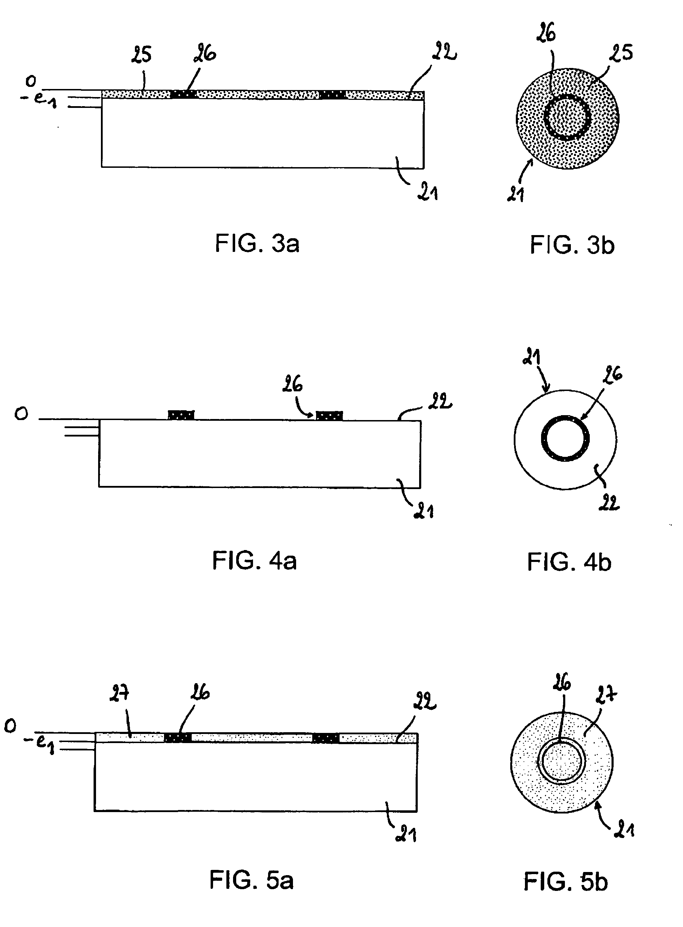

On décrit à présent plus précisément les premières étapes du procédé selon l'invention en référence aux figures 3a à 14b.

Dans le mode de réalisation représenté, la pièce 20 comprend deux matériaux différents, à savoir d'une part un acier inoxydable, par exemple Inox 904 L (premier matériau) et d'autre part du cuivre. Bien entendu, cet exemple n'est pas limitatif.

Pour la réalisation de la première couche 24 de la pièce 20, d'épaisseur e₁ on procède comme suit.

On place la face supérieure 22 du plateau 21 à la position (-e₁) par rapport à la position 0, on dépose une couche 25 de poudre du premier matériau sur l'épaisseur e₁, puis on réalise la fusion / le frittage de cette poudre par le laser, dans la zone souhaitée. On obtient ainsi une première partie 26 sensiblement solide de la première couche 24 de la pièce 20. Comme on le voit sur la figure 3a de côté et 3b de dessus, cette première partie 26 présente ici la forme d'un cercle.

Le plateau 21 est ensuite remonté à la position 0 et la première poudre qui n'a pas été frittée est éliminée, par tout moyen approprié. Le résultat de cette étape est visible sur la figure 4a de côté et sur la figure 4b de dessus : il ne reste alors sur le plateau 21 que la première partie 26 de la première couche 24 de la pièce 20.

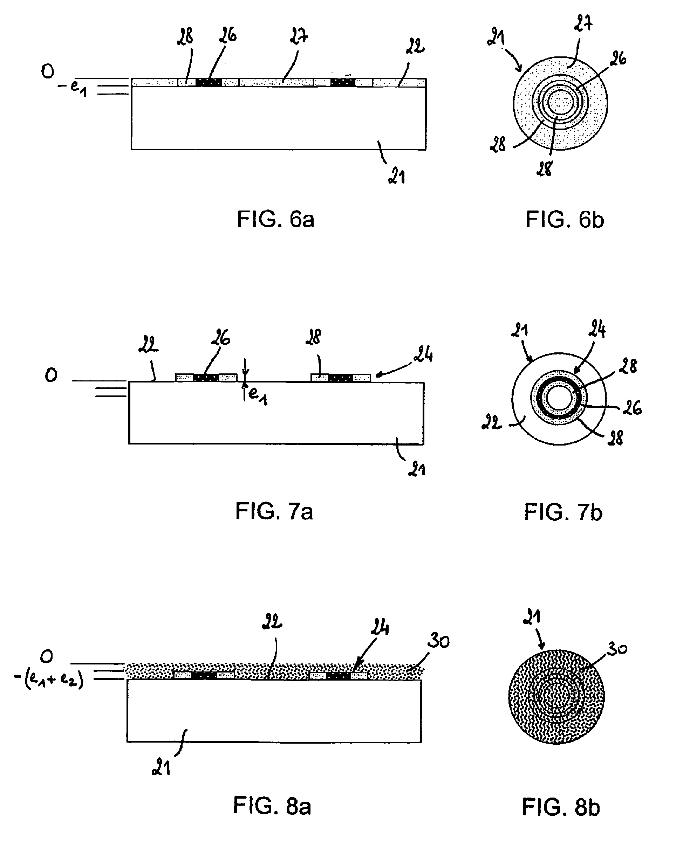

Le plateau 21 est alors baissé à la position (- e₁) et on dépose une couche 27 de poudre du deuxième matériau sur l'épaisseur e₁ (figures 5a de côté et 5b de dessus). On réalise la fusion / le frittage de cette poudre par le laser, dans la zone souhaitée, de façon à obtenir une deuxième partie 28 sensiblement solide de la première couche 24 de la pièce 20. Comme on le voit sur la figure 6a de côté et 6b de dessus, cette deuxième partie 28 présente ici la forme de deux cercles adjacents au cercle formé par le premier matériau, respectivement du côté intérieur et du côté extérieur.

Le plateau 21 est ensuite remonté à la position 0 et la deuxième poudre qui n'a pas été frittée est éliminée, par tout moyen approprié. Le résultat de cette étape est visible sur la figure 7a de côté et sur la figure 7b de dessus : il ne reste alors sur le plateau 21 que la première partie 26 et la deuxième partie 28 solides de la première couche 24 de la pièce 20.

Puis on réalise la deuxième couche 29 de la pièce 20, d'épaisseur e₂.

A cet effet, tout d'abord, on place la face supérieure 22 du plateau 21 à la position - (e₁+e₂) et on dépose une couche 30 de poudre du premier matériau sur l'épaisseur e₁+e₂. La couche 30 recouvre donc la première couche 24 de la pièce 20 précédemment réalisée (figures 8a et 8b).

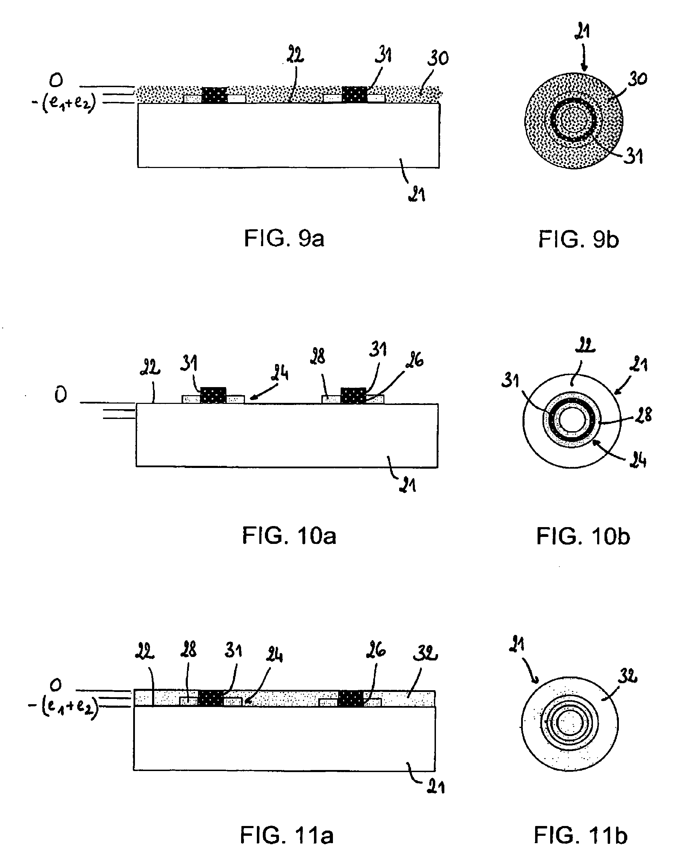

Puis on réalise la fusion / le frittage de cette poudre par le laser, dans la zone souhaitée. On obtient ainsi une première partie 31 sensiblement solide de la deuxième couche 29 de la pièce 20 (figures 9a et 9b).

Le plateau 21 est ensuite remonté à la position 0 et la première poudre qui n'a pas été frittée est éliminée, par tout moyen approprié. Le résultat de cette étape est visible sur les figures 10a et 10b : il reste alors sur le plateau 21 d'une part la première couche 24 de la pièce 20 et d'autre part la première partie 31 de la deuxième couche 29 de la pièce 20.

Le plateau 21 est ensuite à nouveau baissé à la position - (e₁+e₂) et on dépose une couche 32 de poudre du deuxième matériau sur l'épaisseur e₁+e₂ (figures 11a et 11b). La couche 32 recouvre donc la première couche 24 de la pièce 20 précédemment réalisée et se situe sensiblement au même niveau que la face supérieure de la première partie 31 de la deuxième couche 29 de la pièce 20.

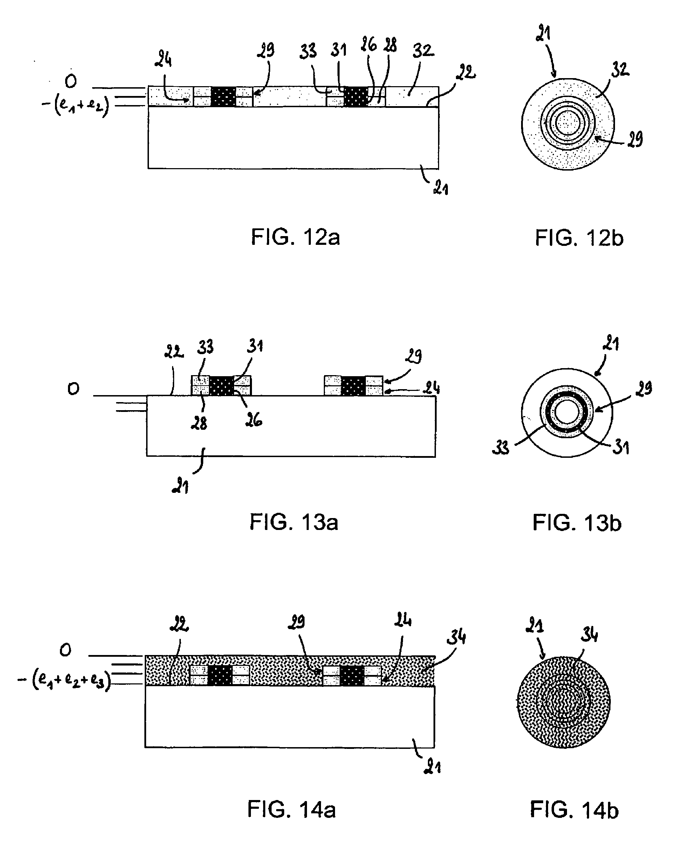

Puis on réalise la fusion / le frittage de cette poudre par le laser, dans la zone souhaitée. On obtient ainsi une deuxième partie 33 sensiblement solide de la de la pièce 20 (figures 12a et 12b).

Le plateau 21 est ensuite remonté à la position 0 et la deuxième poudre qui n'a pas été frittée est éliminée, par tout moyen approprié. Le résultat de cette étape est visible sur les figures 13a et 13b : il ne reste alors sur le plateau 21 que la première couche 24 et la deuxième couche 29 de la pièce 20.

Puis on réalise la troisième couche de la pièce 20, d'épaisseur e₃. La face supérieure 22 du plateau 21 est placée à la position - (e₁+e₂+e₃) et on dépose une couche 34 de poudre du premier matériau sur l'épaisseur e₁+e₂+e₃. La couche 34 recouvre donc la première couche 24 et la deuxième couche 29 de la pièce 20 précédemment réalisées (figures 14a et 14b). La suite du procédé se déroule de façon similaire à ce qui a été décrit ci-dessus.

Dans l'exemple représenté, les deux premières couches 24, 29 de la pièce 20 ont la même forme mais d'autres configurations sont possibles.

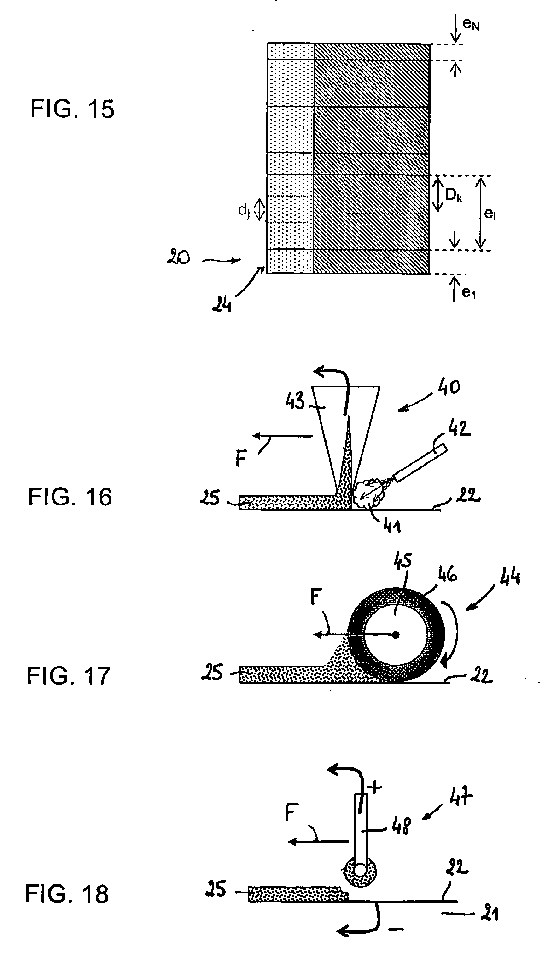

La figure 15 montre schématiquement une pièce 20 réalisée avec le procédé selon l'invention.

La pièce 20 comprend une première couche 24 d'épaisseur e₁ puis des couches successives i d'épaisseur eᵢ jusqu'à la dernière couche N d'épaisseur eN.

Une couche i peut être réalisée en un seul dépôt de la première poudre suivi d'un seul dépôt de la deuxième poudre, comme cela vient d'être décrit.

En variante, une couche i peut être formée comme suit.

Dans un premier temps, on réalise la totalité de la partie de la couche i réalisée dans le premier matériau, mais en plusieurs sous-couches j successives chacune d'épaisseur dⱼ, la somme des épaisseurs dⱼ étant égale à eᵢ. Dans l'exemple de la figure 15, la partie de la couche i réalisée dans le premier matériau est fabriquée en trois sous-couches j.

Lorsqu'une sous-couche j a été réalisée, il n'est pas nécessaire d'éliminer la poudre non frittée avant de réaliser la sous-couche j+1. Il suffit d'abaisser le plateau 21 de dⱼ₊₁ et de déposer une couche de la première poudre d'épaisseur dⱼ₊₁.

Ensuite, quand la partie de la couche i réalisée dans le premier matériau est fabriquée, on élimine toute la première poudre qui n'a pas été frittée.

Dans un deuxième temps, on réalise la totalité de la partie de la couche i réalisée dans le deuxième matériau, mais en plusieurs sous-couches k successives chacune d'épaisseur Dₖ, la somme des épaisseurs Dₖ étant égale à eᵢ. Dans l'exemple de la figure 15, la partie de la couche i réalisée dans le deuxième matériau est fabriquée en deux sous-couches k.

A nouveau, il n'est pas nécessaire d'éliminer la poudre non frittée avant de réaliser la sous-couche suivante, une seule opération d'élimination de poudre étant requise lorsque la totalité de la partie de la couche i réalisée dans le deuxième matériau est fabriquée.

En général, les paramètres optimaux de la fusion / du frittage sélectif par laser dépendent de la nature, de la taille et de la forme des particules de la poudre. Ainsi, pour des poudres différentes, l'épaisseur optimale de la couche de poudre varie. C'est pourquoi, l'utilisation de valeurs différentes de dⱼ et Dₖ, aide à optimiser le procédé. Même avec un même type de poudre, des épaisseurs de poudre différentes peuvent être utilisées selon que l'on réalise une partie intérieure ou extérieure de la pièce finale, afin d'optimiser les propriétés de la pièce et le temps de fabrication.

Enfin, on décrit différents procédés d'élimination de poudre non frittée.

Selon un premier mode de réalisation illustré sur la figure 16, on utilise un système gazodynamique 40 consistant à souffler un gaz 41 au moyen d'une buse 42 - par exemple, une buse supersonique de Laval - en direction de la couche de poudre 25 (par exemple) et/ou à aspirer ladite couche en direction d'un système de récupération de la poudre, au moyen d'un dispositif d'aspiration 43. Le système 40 peut avantageusement être déplacé à la surface du plateau 21 comme indiqué par la flèche F.

Selon un deuxième mode de réalisation illustré sur la figure 17, on utilise un système mécanique 44 qui peut comporter un ou plusieurs rouleaux 45 équipés de brosses 46 et se déplaçant à la surface du plateau 21 comme indiqué par la flèche F.

Selon un troisième mode de réalisation illustré sur la figure 18, on utilise un système électrostatique 47. Ce système met en oeuvre un générateur électrostatique (non représenté) apte à charger - par exemple négativement - la face supérieure 22 du plateau 21 et - par exemple positivement - un organe 48 permettant la récupération de la poudre. Le système 47 peut avantageusement être déplacé à la surface du plateau 21 comme indiqué par la flèche F.

Une combinaison des trois modes de réalisation précités est envisageable.

Ainsi, l'invention apporte une amélioration déterminante à la technique antérieure, en fournissant un procédé qui permet de réaliser des zones frittées de poudres différentes situées dans un même plan horizontal, c'est-à-dire dans une même couche de poudre. L'invention rend possible la réalisation de frontières spatiales courbées entre les zones frittées de poudres différentes, dans une même couche. De ce fait, l'invention permet la fabrication d'objets multimatériaux en trois dimensions sans limites de complexité. En outre, l'invention offre l'avantage d'une haute qualité du produit fini et d'un haut rendement du procédé de frittage.

Il va de soi que l'invention n'est pas limitée aux modes de réalisation décrits ci-dessus à titre d'exemples mais qu'elle en embrasse au contraire toutes les variantes de réalisation.

## Revendications

1. Procédé de réalisation d'une pièce (20) par fusion ou frittage sélectif de poudre par laser, en plusieurs couches i successives, la couche i ayant une épaisseur eᵢ, i variant de 1 à N, au moins une couche i de la pièce (20) comportant au moins un premier et un deuxième matériaux différents, la réalisation de la couche i de la pièce (20) comprenant les étapes suivantes :
a) déposer sur un plateau (21) de fabrication de la pièce (20), possédant une face supérieure (22) sensiblement horizontale, une couche (25, 30, 34) de poudre du premier matériau, jusqu'à un niveau (Eᵢ = e₁ + ... + eᵢ) au-dessus de la face supérieure (22) du plateau (21) ;
b) réaliser la fusion ou le frittage sélectif de la couche i de ladite première poudre par laser, de façon à obtenir une première partie (26, 31) sensiblement solide de la couche i de la pièce (20) ;
c) éliminer la poudre du premier matériau qui n'a pas été frittée, au moins sur une épaisseur eᵢ ;
d) déposer sur le plateau (21) une couche (27, 32) de poudre du deuxième matériau, jusqu'à un niveau Eᵢ au-dessus de la face supérieure (22) du plateau (21) ;
e) réaliser la fusion ou le frittage sélectif de la couche i de ladite deuxième poudre par laser, de façon à obtenir une deuxième partie (28, 33) sensiblement solide de la couche i de la pièce (20), **caractérisé en ce que** suite à la fusion ou au frittage sélectif d'une poudre de la couche i, le plateau (21) est déplacé sensiblement verticalement vers le haut d'une distance non nulle et inférieure ou égale à Ei, puis la poudre est éliminée, puis le plateau (21) est déplacé sensiblement verticalement vers le bas d'une distance appropriée pour l'opération successive de dépôt et de fusion ou frittage sélectif de la poudre d'un autre matériau.

2. Procédé selon la revendication 1, **caractérisé en ce que** :
- on réalise la première partie (26, 31) sensiblement solide de la couche i de la pièce (20) par étapes successives qui, en partant d'une épaisseur (Eᵢ₋₁ = e₁ + ... + eᵢ₋₁) de poudre sur le plateau (21), consistent à :
a1) déposer sur le plateau (21) une couche de poudre du premier matériau sur une épaisseur d₁ < eᵢ ;
b1) réaliser la fusion ou le frittage sélectif de la première poudre par laser, sur une épaisseur d₁ ;
répéter les étapes a1) et b1) pour des épaisseurs successives dⱼ, j variant de 1 à p, avec d₁ + .. + dⱼ + .. + dₚ = eᵢ ;
- puis on réalise la deuxième partie (28, 33) sensiblement solide de la couche i de la pièce (20) par étapes successives qui, en partant d'une épaisseur (Eᵢ₋₁ = e₁ + ... + eᵢ₋₁) de poudre sur le plateau (21), consistent à :
d1) déposer sur le plateau (21) une couche de poudre du deuxième matériau sur une épaisseur D₁ < eᵢ ;
e1) réaliser la fusion ou le frittage sélectif de la deuxième poudre par laser, sur une épaisseur D₁ ;
répéter les étapes d1) et e1) pour des épaisseurs successives Dₖ, k variant de 1 à q, avec D₁+...+Dₖ+...+D_{q} = eᵢ.

3. Procédé selon la revendication 1 ou 2, **caractérisé en ce que** la réalisation de la couche (i+1) de la pièce (20) comprend les étapes successives suivantes :
f) après l'étape e), déplacer le plateau (21) sensiblement verticalement vers le bas jusqu'à une position située à une distance eᵢ₊₁, sous la position occupée par le plateau (21) à l'étape a)
g) répéter les étapes a) à e).

4. Procédé selon l'une des revendications 1 à 3, **caractérisé en ce que** la première couche (24) de la pièce (20) est réalisée sur la face supérieure (22) du plateau (21) de fabrication, et **en ce que**, au début de la réalisation de la couche i de la pièce (20), la face supérieure (22) du plateau (21) est située à une distance Eᵢ en-dessous d'un plan de travail d'une machine (100) pour la mise en oeuvre du procédé.

5. Procédé selon la revendication 3 ou 4, **caractérisé en ce que**, entre les étapes e) et f), le procédé comprend en outre l'étape consistant à éliminer la poudre du deuxième matériau qui n'a pas été frittée, au moins sur une épaisseur eᵢ.

6. Procédé selon l'une des revendications 1 à 5, **caractérisé en ce que**, après la fusion ou le frittage sélectif d'une poudre, et avant le dépôt d'une poudre d'un autre matériau, on élimine la totalité de ladite poudre qui n'a pas été frittée.

7. Procédé selon la revendication 6, **caractérisé en ce que**, suite à la fusion ou au frittage sélectif d'une poudre de la couche i, le plateau (21) est déplacé sensiblement verticalement vers le haut d'une distance égale à Eᵢ.

8. Procédé selon l'une des revendications 1 à 7, **caractérisé en ce que** la poudre est éliminée par un procédé mécanique mettant en oeuvre des moyens (44, 45, 46) tels que une brosse, un rouleau, un couteau ou équivalent.

9. Procédé selon l'une des revendications 1 à 7, **caractérisé en ce que** la poudre est éliminée par l'action d'un gaz (41) soufflé en utilisant, par exemple, une buse supersonique de Laval, et/ou par aspiration.

10. Procédé selon l'une des revendications 1 à 7, **caractérisé en ce que** la poudre est éliminée par un procédé électrostatique.

11. Procédé selon l'une des revendications 1 à 10, **caractérisé en ce que** la poudre est déposée par un ou plusieurs rouleaux (17) et/ou par un dispositif comportant une racle et/ou par projection gazodynamique.

12. Procédé selon l'une des revendications 1 à 11, **caractérisé en ce qu'**il comprend en outre une étape de récupération séparée des première et deuxième poudres.

13. Machine pour la réalisation d'une pièce (20) par fusion ou frittage sélectif de poudre par laser, en plusieurs couches i successives, la couche i ayant une épaisseur eᵢ, i variant de 1 à N, au moins une couche i de la pièce (20) comportant au moins un premier et un deuxième matériaux différents, la machine (100) comprenant :
- un laser et un dispositif de balayage et de focalisation (1) apte à diriger le faisceau du laser en différents points successifs de la pièce (20) en cours de réalisation ;
- un plateau (21) de fabrication de la pièce (20) possédant une face supérieure (22) sensiblement horizontale ;
- un premier et un deuxième récipients (10, 10') aptes à contenir respectivement une poudre d'un premier matériau et une poudre d'un deuxième matériau différent du premier ;
- des moyens (11, 17) pour déposer une couche de poudre sur le plateau (21) ;
- des moyens (16, 40, 44, 47) pour éliminer la poudre qui n'a pas été frittée ;
**caractérisée en ce qu'**elle comprend en outre des moyens (23) de déplacement du plateau (21), sensiblement verticalement, aptes à provoquer le déplacement du plateau (21) vers le haut et vers le bas d'une distance eᵢ au cours de la réalisation de la couche i de la pièce (20).

14. Machine selon la revendication 13, **caractérisée en ce que** les moyens de déplacement du plateau (21) comprennent au moins un organe de déplacement du plateau (21) tel qu'un vérin (23), actionné par un moteur pas à pas couplé à un dispositif à commande numérique.

15. Machine selon la revendication 13 ou 14, **caractérisée en ce qu'**elle comprend en outre au moins un organe de chauffage (2) apte à chauffer optiquement la couche de poudre afin de permettre sa fusion / son frittage.

## Claims

1. A method for making a part (20) by powder melting or selective sintering by laser, in several successive layers i, the layer i having a thickness eᵢ, i varying from 1 to N, at least one layer i of the part (20) including at least one first and second different materials, the making of the layer i of the part (20) comprising the following steps:
a) depositing on a plate (21) for manufacturing the part (20), having a substantially horizontal upper face (22), a layer (25, 30, 34) of powder of the first material, up to a level (Eᵢ = e₁ + ... + eᵢ) above the upper face (22) of the plate (21);
b) achieving the melting or selective sintering of the layer i of said first powder with a laser, in order to obtain a first substantially solid portion (26, 31) of the layer i of the part (20);
c) removing the powder of the first material which has not been sintered, at least over a thickness eᵢ;
d) depositing on the plate (21), a layer (27, 32) of powder of the second material up to a level Eᵢ above the upper face (22) of the plate (21);
e) achieving the melting or selective sintering of the layer i of said second powder with a laser, in order to obtain a second substantially solid portion (28, 33) of the layer i of the part (20),
**characterized in that**, following the melting or selective sintering of a powder of the layer i, the plate (21) is moved substantially vertically upwards by a non-zero distance of less than or equal to Eᵢ, the powder is then removed, and the plate (21) is moved substantially vertically downwards by a suitable distance for the successive operation of depositing and melting or selectively sintering the powder of another material.

2. The method according to claim 1, **characterized in that**:
- the first substantially solid portion (26, 31) of the layer i of the part (20) is made by successive steps which, starting with a powder thickness (Eᵢ₋₁ = e₁ + ... + eᵢ₋₁) on the plate (21), consist of:
a1) depositing on the plate (21), a layer of powder of the first material on a thickness d₁<eᵢ;
b1) achieving the melting or selective sintering of the first powder with a laser, on a thickness d₁;
repeating steps a1) and b1) for successive thicknesses dⱼ, j varying from 1 to p, with d₁+...+dⱼ+...+dₚ=e_{¡};
- and the second substantially solid portion (28, 33) of the layer i of the part (20) is then made by successive steps which, starting with a powder thickness (Eᵢ₋₁ = e₁ + ... + eᵢ₋₁) on the plate (21), consist of:
d1) depositing on the plate (21), a layer of powder of the second material on a thickness D₁<eᵢ;
e1) achieving the melting or selective sintering of the second powder with a laser, on a thickness D₁;
repeating steps d1) and e1) for successive thicknesses Dₖ, k varying from 1 to q, with Dᵢ+...+Dₖ+...+D_{q}=eᵢ.

3. The method according to claim 1 or 2, **characterized in that** the making of the layer (i+1) of the part (20) comprises the following successive states:
f) after step e), moving the plate (21) substantially vertically downwards down to a position located at a distance eᵢ₊₁ under the position occupied by the plate (21) in step a)
g) repeating the steps a) to e).

4. The method according to any of claims 1 to 3, **characterized in that** the first layer (24) of the part (20) is made on the upper face (22) of the manufacturing plate (21), and **in that**, at the beginning of the making of the layer i of the part (20), the upper face (22) of the plate (21) is located at a distance Eᵢ underneath a working plane of a machine (100) for applying the method.

5. The method according to claim 3 or 4, **characterized in that**, between steps e) and f), the method further comprises the step consisting of removing the powder of the second material which has not been sintered, at least on a thickness eᵢ.

6. The method according to any of claims 1 to 5, **characterized in that**, after melting or selective sintering of a powder, and before depositing a powder of another material, the totality of said powder which has not been sintered, is removed.

7. The method according to claim 6, **characterized in that**, following the melting or selective sintering of a powder of the layer i, the plate (21) is moved substantially vertically upwards by a distance equal to Eᵢ.

8. The method according to any of claims 1 to 7, **characterized in that** the powder is removed by a mechanical method applying means (44, 45, 46) such as a brush, a roll, a knife or equivalent.

9. The method according to any of claims 1 to 7, **characterized in that** the powder is removed by the action of blown gas (41) by for example using a Laval supersonic nozzle, and/or by suction.

10. The method according to any of claims 1 to 7, **characterized in that** the powder is removed by an electrostatic method.

11. The method according to any of claims 1 to 10, **characterized in that** the powder is deposited by one or more rolls (17) and/or by a device including a doctor blade and/or by gas spraying.

12. The method according to any of claims 1 to 11, **characterized in that** it further comprises a separate step for recovering the first and second powders.

13. A machine for making a part (20) by powder melting or selective sintering with a laser, in several successive layers i, the layer i having a thickness eᵢ, i varying from 1 to N, at least one layer i of the part (20) including at least one first and second different materials, the machine comprising:
- a laser and a scanning and focussing device (1) capable of directing the laser beam onto various successive points of the part (20) being made;
- a plate (21) for manufacturing the part (20), having a substantially horizontal face (22);
- first and second containers (10,10') capable of respectively containing a powder of a first material and a powder of a second material different from the first;
- means (11,17) for depositing a layer of powder on the plate (21);
- means (16, 40, 44, 47) for removing the powder which has not been sintered;
**characterized in that** it further comprises means (23) for moving the plate (21) substantially vertically, capable of moving the plate (21) upwards and downwards by a distance eᵢ during the making of the layer i of the part (20).

14. The machine according to claim 13, **characterized in that** the means for moving the plate (21) comprise at least one member for moving the plate (21) such as an actuator (23), actuated by a stepping motor coupled with a numerical control device.

15. The machine according to claim 13 or 14, **characterized in that** it further comprises at least one heating member (2) capable of optically heating the powder layer in order to allow its melting/its sintering.

## Patentansprüche

1. Verfahren zur Herstellung eines Werkstücks (20) durch Schmelzen oder selektives Sintern von Pulver durch Laser in mehreren aufeinanderfolgenden Schichten i, wobei die Schicht i eine Dicke eᵢ hat, wobei i von 1 bis N schwankt, wobei mindestens eine Schicht i des Werkstücks (20) mindestens einen ersten und einen zweiten unterschiedlichen Werkstoff aufweist, wobei die Herstellung der Schicht i des Werkstücks (20) die folgenden Schritte umfasst:
a) Aufbringen einer Pulverschicht (25, 30, 34) des ersten Werkstoffs auf einer Werkplatte (21) zur Herstellung des Werkstücks (20), die eine etwa horizontale obere Seite (22) besitzt, bis zu einem Niveau (Eᵢ = eᵢ + ... + eᵢ) auf der Oberseite (22) der Werkplatte (21),
b) Durchführen des Schmelzens oder des selektiven Sintern der Schicht i des ersten Pulvers durch Laser, um einen ersten etwa festen Abschnitt (26, 31) der Schicht i des Werkstücks (20) zu erhalten,
c) Entfernen des Pulvers des ersten Werkstoffs, das nicht gesintert wurde, mindestens in einer Dicke eᵢ,
d) Aufbringen einer Pulverschicht (27, 32) des zweiten Werkstoffs auf der Werkplatte (21) bis zu einem Niveau Eᵢ auf der Oberseite (22) der Werkplatte (21),
e) Durchführen des Schmelzens oder des selektiven Sinterns der Schicht i des zweiten Pulvers durch Laser, um einen zweiten etwa festen Abschnitt (28, 33) der Schicht i des Werkstücks (20) zu erhalten,
**dadurch gekennzeichnet, dass** die Werkplatte (21) nach dem Schmelzen oder dem selektiven Sintern eines Pulvers der Schicht i in einem Abstand, der nicht null ist und kleiner oder gleich Eᵢ, etwa vertikal nach oben verschoben wird, danach das Pulver entfernt wird, danach die Werkplatte (21) in einem Abstand, der für den folgenden Vorgang des Aufbringens und des Schmelzens oder des selektiven Sinterns des Pulvers eines anderen Werkstoff geeignet ist, etwa vertikal nach unten verschoben wird.

2. Verfahren nach Anspruch 1, **dadurch gekennzeichnet, dass**:
- der erste etwa feste Abschnitt (26, 31) der Schicht i des Werkstücks (20) in aufeinanderfolgenden Schritten hergestellt wird, die, ausgehend von einer Dicke (Eᵢ₋₁ = eᵢ + ... + eᵢ₋₁) des Pulvers auf der Werkplatte (21) bestehen im:
a1) Aufbringen einer Pulverschicht des ersten Werkstoffs in einer Dicke d₁ < eᵢ auf der Werkplatte (21),
b1) Durchführen des Schmelzens oder des selektiven Sinterns des ersten Pulvers durch Laser in einer Dicke d₁,
Wiederholen der Schritte a1) und b1) für aufeinanderfolgende Dicken dⱼ, wobei j von 1 bis p schwankt, mit d₁ + ... + dⱼ + ... + dₚ = eᵢ,
- darauffolgendes Herstellen des zweiten etwa festen Abschnitts (28, 33) der Schicht i des Werkstücks (20) in aufeinanderfolgenden Schritten, die, ausgehend von einer Dicke (Eᵢ₋₁ = eᵢ + ... + eᵢ₋₁) des Pulvers auf der Werkplatte (21) bestehen im:
d1) Aufbringen einer Pulverschicht des zweiten Werkstoffs in einer Dicke D₁ < eᵢ auf der Werkplatte (21),
e1) Durchführen des Schmelzens oder des selektiven Sinterns des zweiten Pulvers durch Laser in einer Dicke D₁,
Wiederholen der Schritte d1) und e1) für aufeinanderfolgende Dicken Dₖ, wobei k von 1 bis q schwankt, mit D₁ + ... + Dₖ + ... + D_{q} = eᵢ.

3. Verfahren nach Anspruch 1 oder 2, **dadurch gekennzeichnet, dass** die Herstellung der Schicht (i+1) des Werkstücks (20) die folgenden aufeinanderfolgenden Schritte umfasst:
f) nach Schritt e) etwa vertikales Verschieben der Werkplatte (21) nach unten bis zu einer Position, die sich in einem Abstand eᵢ₊₁ unter der Position befindet, die von der Werkplatte (21) bei Schritt a) eingenommen wird,
g) Wiederholen der Schritte a) bis e).

4. Verfahren nach einem der Ansprüche 1 bis 3, **dadurch gekennzeichnet, dass** die erste Schicht (24) des Werkstücks (20) auf der Oberseite (22) der Werkplatte (21) hergestellt wird und dass sich die Oberseite (22) der Werkplatte (21) zu Beginn der Herstellung der Schicht i des Werkstücks (20) in einem Abstand Eᵢ unterhalb einer Arbeitsebene einer Maschine (100) für die Umsetzung des Verfahrens befindet.

5. Verfahren nach Anspruch 3 oder 4, **dadurch gekennzeichnet, dass** das Verfahren zwischen den Schritten e) und f) weiterhin den Schritt umfasst, der darin besteht, das Pulver des zweiten Werkstoffs, das nicht gesintert wurde, zu entfernen, zumindest in einer Dicke eᵢ.

6. Verfahren nach einem der Ansprüche 1 bis 5, **dadurch gekennzeichnet, dass** nach dem Schmelzen oder dem selektiven Sintern eines Pulvers und vor dem Aufbringen eines Pulvers eines anderen Werkstoffs das gesamte Pulver, das nicht gesintert wurde, entfernt wird.

7. Verfahren nach Anspruch 6, **dadurch gekennzeichnet, dass** die Werkplatte (21) nach dem Schmelzen oder dem selektiven Sintern eines Pulvers der Schicht i in einem Abstand von gleich Eᵢ etwa vertikal nach oben verschoben wird.

8. Verfahren nach einem der Ansprüche 1 bis 7, **dadurch gekennzeichnet, dass** das Pulver durch ein mechanisches Verfahren entfernt wird, das Mittel (44, 45, 46) wie eine Bürste, eine Rolle, ein Messer oder ähnliches umsetzt.

9. Verfahren nach einem der Ansprüche 1 bis 7, **dadurch gekennzeichnet, dass** das Pulver durch die Wirkung eines Druckgases (41) entfernt wird, wobei zum Beispiel eine Laval-Überschalldüse verwendet wird, und/oder durch Ansaugen.

10. Verfahren nach einem der Ansprüche 1 bis 7, **dadurch gekennzeichnet, dass** das Pulver durch ein elektrostatisches Verfahren entfernt wird.

11. Verfahren nach einem der Ansprüche 1 bis 10, **dadurch gekennzeichnet, dass** das Pulver von einer oder mehreren Rollen (17) und/oder von einer Vorrichtung aufgebracht wird, die eine Rakel aufweist und/oder durch gasdynamische Projektion.

12. Verfahren nach einem der Ansprüche 1 bis 11, **dadurch gekennzeichnet, dass** es weiterhin einen Schritt der getrennten Rückgewinnung des ersten und zweiten Pulvers umfasst.

13. Maschine zur Herstellung eines Werkstücks (20) durch Schmelzen oder selektives Sintern von Pulver durch Laser in mehreren aufeinanderfolgenden Schichten i, wobei die Schicht i eine Dicke eᵢ hat, wobei i von 1 bis N schwankt, wobei mindestens eine Schicht i des Werkstücks (20) mindestens einen ersten und einen zweiten unterschiedlichen Werkstoff aufweist, wobei die Maschine (100) umfasst:
- einen Laser und eine Abtast- und Fokalisierungsvorrichtung (1), die imstande ist, das Strahlenbündel des Lasers während der Herstellung an verschiedene aufeinanderfolgende Punkte des Werkstücks (20) zu lenken,
- eine Werkplatte (21) zur Herstellung des Werkstücks (20), die eine etwa horizontale Oberseite (22) besitzt,
- einen ersten und einen zweiten Behälter (10, 10'), die imstande sind, jeweils ein Pulver eines ersten Werkstoffs und ein Pulver eines zweiten Werkstoffs, der sich vom ersten unterscheidet, zu enthalten,
- Mittel (11, 17), um eine Pulverschicht auf die Werkplatte (21) aufzubringen,
- Mittel (16, 40, 44, 47), um das Pulver, das nicht gesintert wurde, zu entfernen,
**dadurch gekennzeichnet, dass** sie weiterhin Mittel (23) zum etwa vertikalen Verschieben der Werkplatte (21) umfasst, die imstande sind, während der Herstellung der Schicht i des Werkstücks (20) das Verschieben der Werkplatte (21) nach oben und nach unten in einem Abstand eᵢ zu veranlassen.

14. Maschine nach Anspruch 13, **dadurch gekennzeichnet, dass** die Verschiebemittel der Werkplatte (21) mindestens ein Organ zum Verschieben der Werkplatte (21) wie einen Zylinder (23) umfassen, der von einem mit einer digitalen Steuerungsvorrichtung gekoppelten Schrittmotor angetrieben wird.

15. Maschine nach Anspruch 13 oder 14, **dadurch gekennzeichnet, dass** sie weiterhin mindestens ein Heizorgan (2) umfasst, das imstande ist, die Pulverschicht optisch zu erwärmen, um ihr Schmelzen / ihr Sintern zu erlauben.
